# EUROPÄISCHE PATENTANMELDUNG

(11) **EP 2 602 992 A2**
(43) Veröffentlichungstag der Anmeldung: **12.06.2013**
(21) Anmeldenummer: 12194824.4
(22) Anmeldetag: 29.11.2012
(51) Int. Cl.: H04N 5/76

(54) **Gerät zum Aufzeichnen und/oder Wiedergeben von Programmbeiträgen**

(30) Priorität: 09.12.2011 DE 102011056230
(71) Anmelder: Loewe Opta GmbH, 96317 Kronach (DE)
(72) Erfinder: Weickert, Bernd, 96224 Burgkunstadt (DE)
(74) Vertreter: Pröll, Jürgen

(57) **Zusammenfassung**

Die Vorliegende Erfindung betrifft ein elektronisches Gerät, mindestens aufweisend einen Empfänger zum Empfangen von Fernseh- und/oder Tonrundfunkprogrammen, einen Speicher zum Speichern von Bedien-Software mindestens für die Steuerung des elektronischen Geräts, eine Darstellungseinheit zum Darstellen von Fernseh- und/oder Tonrundfunkprogrammen, eine Steuereinheit und eine Schnittstelle für den Anschluss eines externen Speichergeräts zum Speichern von Fernseh- und/oder Tonrundfunkprogrammbeiträgen. Dieses zeichnet sich dadurch aus dass in dem externen Speichergerät eine Aufzeichnungs- und/oder Wiedergabe-Software gespeichert ist, die über die Schnittstelle in einen Speicher des elektronischen Geräts übertragbar ist.

## Beschreibung

Die vorliegende Erfindung betrifft ein elektronisches Gerät, das mindestens einen Empfänger zum Empfangen von Fernseh- und/oder Tonrundfunkprogrammen, einen Speicher zum Speichern von Bedien-Software mindestens für die Steuerung des elektronischen Geräts, eine Darstellungseinheit zum Darstellen von Fernseh- und/oder Tonrundfunkprogrammen, eine Steuereinheit und eine Schnittstelle für den Anschluss eines externen Speichergerätes zum Speichern von Fernseh- und/oder Tonrundfunkprogrammbeiträgen aufweist. Die Erfindung betrifft ferner ein externes Speichergerät, welches über eine Schnittstelle mit einem elektronischen Gerät verbindbar ist, und ein Aufzeichnungs- und/oder Wiedergabesystem, das ein elektronisches Gerät und ein externes Speichergerät aufweist.

Elektronische Geräte, insbesondere Geräte der Unterhaltungselektronik, sind hinlänglich bekannt, wobei die elektronischen Geräte die Möglichkeit der Aufzeichnung von Rundfunksignalen, sowohl Tonrundfunk- als auch Fernsehrundfunksignalen, aufweisen. Problematisch bei diesen Geräten ist es, dass eine gesetzliche Urheberrechtsabgabe nach dem Urheberrecht zu entrichten ist, wenn diese elektronischen Geräte geeignet sind, Tonrundfunk- und/oder Fernsehrundfunkprogramme aufzuzeichnen und wiederzugeben. Die Urheberrechtsabgabe ist jedoch nicht zu zahlen, wenn keine permanente Aufzeichnung, keine Kopierbarkeit der Aufzeichnung und/oder keine mehrfache Wiedergabe der aufgezeichneten Tonrundfunk- und/oder Fernsehrundfunkprogramme technisch bedingt möglich sind.

Moderne elektronische Geräte, wie beispielsweise ein Fernseher oder Set-Top-Boxen, verfügen über eine digitale Schnittstelle (USB), an welche Speichermedien angeschlossen werden kann. Die elektronischen Geräte weisen einen Speicher auf, in welchem eine Software zum Speichern von empfangenen Sendungen in einem internen Gerätespeicher (Festplatte) oder auf externen Speichermedien gespeichert ist. Für diese elektronischen Geräte wird daher eine gesetzliche Urheberrechts-Abgabe fällig, da diese - ähnlich wie bei einem Videorecorder - das Vervielfältigen von urheberrechtlich geschützten Inhalten ermöglichen. Derzeit müssen für alle Geräte, die ein Vervielfältigen von urheberrechtlich geschützten Inhalten ermöglichen, derartige Abgaben entrichtet werden. Da inzwischen sehr viele elektronische Geräte (z.B. Fernseher, Video/DVD/Blu-ray-Player/Recorder, Receiver, und andere) dazu ausgebildet sind, Sendungen aufzuzeichnen, ist für jedes dieser Geräte eine entsprechende Abgabe zu entrichten. Darüber hinaus sind derartige Abgaben auch für Leermedien (unbespielte Bildtonträger, DVD-Rohlinge, unbespielte Tonträger), USB-Sticks und Speicherkarten zu entrichten.

In dem Artikel "Keine Spontankopie bei HP-Geräten wegen Urheberrechtsabgaben der VG-Wort", abrufbar unter http://www.druckertester.de/2008/08/07/keine-spontankopiebei-hp-geraeten-wegen-urheberrechtsabgaben-der-vg-wort/, wird beschrieben, die Urheberrechtsabgabe für Multifunktionsgeräte, welche drucken, scannen und kopieren können, zu reduzieren, indem die Kopierfunktion vollständig auf einen angeschlossenen PC übertragen wird.

US 2007/0174919 offenbart ein digitales Rechtemanagement, wobei ein Fernsehgerät und ein angeschlossenes Speichermedium sich gegenseitig identifizieren, um sicherzustellen, dass der auf dem Speichermedium gespeicherte Inhalt auch auf dem Fernsehgerät wiedergegeben werden darf.

Die Aufgabe der vorliegenden Erfindung besteht daher darin, ein elektronisches Gerät, ein externes Speichergerät sowie ein Aufzeichnungs- und/oder Wiedergabesystem anzugeben, wobei ein Aufzeichnen und/oder Wiedergeben von Fernseh- und/oder Tonrundfunkprogrammbeiträgen bereitgestellt wird und wobei das elektronische Gerät jedoch nicht als kopier- bzw. vervielfältigungsfähiges Gerät ausgebildet ist.

Die Aufgabe wird durch ein elektronisches Gerät, welches mindestens einen Empfänger zum Empfangen von Fernseh- und/oder Tonrundfunkprogrammen, einen Speicher zum Speichern von Bedien-Software mindestens für die Steuerung des elektronischen Geräts, eine Darstellungseinheit zum Darstellen von Fernseh- und/oder Tonrundfunkprogrammen, eine Steuereinheit und eine Schnittstelle für den Anschluss eines externen Speichergeräts zum Speichern von Fernseh- und/oder Tonrundfunkprogrammbeiträgen aufweist, gelöst, wobei in dem externen Speichergerät eine Aufzeichnungs- und/oder Wiedergabe-Software gespeichert ist. Die Aufzeichnungs- und/oder Wiedergabe-Software wird über die Schnittstelle in einen Speicher des elektronischen Geräts übertragen und aktiviert das elektronische Gerät zum Speichern eines empfangenen Programmbeitrags und/oder zum Speichern eines in einem Speicher des elektronischen Gerätes gespeicherten Programmbeitrags im externen Speichergerät und/oder zur Wiedergabe eines im externen Speichergerät gespeicherten Programmbeitrags nur so lange, wie das externe Speichergerät elektrisch angeschlossen ist. Elektrisch angeschlossen bedeutet erfindungsgemäß sowohl eine physische Verbindung zwischen dem elektronischen Gerät und dem externen Speichergerät als auch eine drahtlose Verbindung zwischen dem elektronischen Gerät und dem externen Speichergerät, beispielsweise über eine Funkverbindung.

Mittels der Steuereinheit wird die Aufzeichnungs- und/oder die Wiedergabe-Software an den Speicher zum Aufzeichnen eines empfangenen Fernseh- und/oder Tonrundfunkprogrammbeitrags oder zum Wiedergeben eines in einem internen Programmbeitragspeicher des externen Speichergeräts gespeicherten Fernseh- und/oder Tonrundfunkprogrammbeitrags automatisch übertragen, wenn das externe Speichergerät mit dem elektronischen Gerät verbunden ist und/oder durch eine Eingabe eines Übertragungsbefehls über die Steuereinheit die Aufzeichnungs- und/oder Wiedergabe-Software übertragen wird. Darüber hinaus wird die Aufzeichnungs- und/oder die Wiedergabe-Software nur solange in dem Speicher des elektronischen Geräts gespeichert, wie eine Datenspeicherung einer Aufzeichnung von empfangenen Fernseh- und/oder Tonrundfunkprogrammbeiträgen und/oder eine Wiedergabe eines in dem externen Speichergerät gespeicherten Fernseh- und/oder Tonrundfunkprogrammbeitrags erfolgt oder bis das externe Speichergerät von der Schnittstelle abgezogen wird.

Als Darstellungseinheit zum Darstellen von Fernseh- und/oder Tonrundfunkprogrammen im Sinne der Erfindung sind beispielsweise auch Lautsprecher eines Radiogerätes zu verstehen, die empfangene Tonrundfunkprogramme akustisch wiedergeben. Die vorliegende Erfindung ist nicht auf die rein visuelle Wiedergabe von Fernseh- und/oder Tonrundfunkprogrammen beschränkt. Empfangene Fernseh- und/oder Tonrundfunkprogramme umfassen auch von einem Empfänger eines elektronischen Geräts empfangene Signale einer CD oder einer DVD.

Um nicht sämtliche elektronischen Geräte mit einer solchen Abgabe zu belasten, wird daher erfindungsgemäß die von den elektronischen Geräten zum Aufzeichnen von Fernseh- und/oder Tonrundfunkprogrammbeiträgen bereitgestellte Aufzeichnungsfunktionalität auf angeschlossene Speichermedien verlagert.

Erfindungsgemäß ist dabei die Aufzeichnungs- und/oder Wiedergabe-Software nicht in dem elektronischen Gerät gespeichert, so dass das elektronische Gerät nicht dazu ausgebildet ist, Fernseh- und/oder Tonrundfunkprogrammbeiträge aufzuzeichnen bzw. wiederzugeben. Daher entfällt für dieses Gerät eine gesetzliche Urheberrechts-Abgabe, da ein Vervielfältigen von urheberrechtlich geschützten Inhalten nicht möglich ist. Ist es jedoch gewünscht, einen Fernseh- und/oder Tonrundfunkprogrammbeitrag aufzuzeichnen oder einen in einem externen Speichergerät gespeicherten Fernseh- und/oder Tonrundfunkprogrammbeitrag wiederzugeben, so wird die dafür erforderliche Software erst nach dem Anschluss des externen Speichergeräts an das elektronische Gerät über die Schnittstelle in einen Speicher des elektronischen Geräts geladen. Dieses kann sodann einen Fernseh- und/oder Tonrundfunkprogrammbeitrag aufzeichnen oder einen auf dem externen Speichergerät gespeicherten Fernseh- und/oder Tonrundfunkprogrammbeitrag wiedergeben. Ist die Aufzeichnung bzw. Wiedergabe beendet, so wird durch die Steuereinheit des elektronischen Geräts die Aufzeichnung- und/oder Wiedergabesoftware in dem elektronischen Gerät gelöscht. Eine Vervielfältigung von urheberrechtlich geschützten Inhalten ist deshalb nicht möglich, wodurch für derartige elektronische Geräte die eingangs genannten Urheberrechts-Abgaben entfallen.

Darüber hinaus kann die Aufzeichnungs- und/oder Wiedergabesoftware durch die Steuereinheit des elektronischen Geräts gelöscht werden, wenn die Aufzeichnung eines Fernseh- und/oder Tonrundfunkprogrammbeitrags oder die Wiedergabe eines auf dem externen Speichergerät gespeicherten Fernseh- und/oder Tonrundfunkprogrammbeitrags beendet ist, das elektronische Gerät ausgeschaltet wird oder das externe Speichergerät von der Schnittstelle des elektronischen Geräts abgezogen wird, wodurch die Verbindung von dem externen Speichergerät zu dem elektronischen Gerät getrennt wird. In dieser Weiterbildung der Erfindung wird dabei nach der Aufzeichnung eines empfangenen Fernseh- und/oder Tonrundfunkprogrammbeitrags oder nach der Wiedergabe eines in dem externen Speichergerät gespeicherten Fernseh- und/oder Tonrundfunkprogrammbeitrags oder nach dem Trennen der Verbindung des externen Speichergeräts von der Schnittstelle des elektronischen Geräts oder nach dem Ausschalten des elektronischen Geräts mittels der Steuereinheit automatisch die Aufzeichnungs- und/oder die Wiedergabe-Software in dem Speicher des elektronischen Geräts gelöscht. Daher ist es für einen Benutzer des elektronischen Geräts nicht möglich, das Löschen der Aufzeichnungs- und/oder Wiedergabe-Software in dem Speicher des elektronischen Geräts abzulehnen und somit zu unterbinden. Die Steuereinheit ist dazu derart ausgebildet, dass ein Löschen der Aufzeichnungs- und/oder Wiedergabe-Software immer nach bzw. bei Erfüllung der oben genannten Kriterien erfolgt. Weiterhin kann dazu die Aufzeichnungs- und/oder Wiedergabe-Software in einem speziellen, nur für die Aufzeichnungs- und/oder Wiedergabe-Software vorgesehenen Speicher gespeichert werden. Beispielsweise kann es sich bei diesem um einen dynamischen oder flüchtigen Speicher handeln. Vorteilhafterweise wird dabei auch beim Trennen des elektronischen Geräts von einer Spannungsquelle (z.B. Ziehen des Netzsteckers), die Aufzeichnungs- und/oder Wiedergabe-Software automatisch, auch ohne die Steuereinheit, gelöscht.

In einer Weiterbildung ist die Aufzeichnungs- und/oder Wiedergabe-Software teilweise in dem Speicher des elektronischen Geräts und dem externen Speichergerät gespeichert. Auch dabei ist das elektronische Gerät allein nicht in der Lage, einen Fernseh- und/oder Tonrundfunkprogrammbeitrag ohne die auf dem externen Speichergerät gespeicherte Aufzeichnungs- und/oder Wiedergabesoftware aufzuzeichnen und/oder wiederzugeben.

Weiterhin kann die Aufzeichnungs- und/oder Wiedergabe-Software in dem Speicher des elektronischen Geräts gespeichert sein und in dem externen Speichergerät ist eine dazugehörige Kennung gespeichert, wodurch eine Aktivierung der Aufzeichnungs- und/oder der Wiedergabe-Software mittels der Steuereinheit erfolgt. Das elektronische Gerät kann daher von dem elektronischen Gerät empfangene Fernseh- und/oder Tonrundfunkprogrammbeiträge nur dann speichern, wenn das elektronische Gerät mit dem externen Speichergerät verbunden ist und das externe Speichergerät eine für die Aufzeichnungs- und/ oder Wiedergabe-Software in dem Speicher des elektronischen Geräts notwendige Kennung aufweist bzw. diese in dem externen Speichergerät gespeichert ist. Ist im externen Speichergerät die dazugehörige Kennung gespeichert, wird dies durch die Steuereinheit des elektronischen Geräts erkannt und die Aufzeichnungs- und/oder Wiedergabe-Software des elektronischen Geräts kann aktiviert bzw. geladen werden.

Darüber hinaus ist die Aufzeichnungs- und/oder Wiedergabe-Software in dem externen Speichergerät an den Speicher des elektronischen Geräts nur dann übertragbar, wenn eine Kennung des elektronischen Geräts mit einer in dem externen Speichergerät abgespeicherten Kennung übereinstimmt. Dadurch wird beispielsweise eine nicht autorisierte Modifizierung (z.B. einen geänderte Aufzeichnungs- und/oder Wiedergabe-Software) des elektronischen Geräts verhindert, wenn ein nicht zugelassenes externes Speichergerät oder ein modifiziertes externes Speichergerät an das elektronische Gerät angeschlossen wird, welches versucht, die Aufzeichnungs- und/oder Wiedergabe-Software dauerhaft in dem Speicher des elektronischen Geräts oder in einem anderen, weiteren Speicher des elektronischen Geräts zu speichern. Dabei kann die Kennung des externen Speichergeräts gelöscht werden, wenn eine nicht zugelassene Software auf das externe Speichergerät überspielt wird oder derartige Software darauf gespeichert ist. Das heißt, die in dem externen Speichergerät gespeicherte Kennung wird automatisch gelöscht, wenn die Aufzeichnungs- und/oder Wiedergabe-Software geändert oder überschrieben wird. So kann in elektronischen Geräten eine Auflistung der Kennungen von externen Speichergeräten hintergelegt sein, für die eine Kommunikation und eine Übertragung einer Aufzeichnungs- und/oder Wiedergabe-Software möglich sind.

Dabei kann die Kennung eine MAC-Adresse oder eine Seriennummer sein.

Auch können die in dem externen Speichergerät gespeicherten Fernseh- und/oder Tonrundfunkprogrammbeiträge nur auf dem elektronischen Gerät wiedergebbar sein, mit welchem die Fernseh- und/oder Tonrundfunkprogrammbeiträge auf dem angeschlossenen externen Speichergerät aufgezeichnet worden sind. Dabei kann von der Steuereinheit des elektronischen Geräts eine Kennung generiert werden, welche auf dem externen Speichergerät gespeichert wird, wobei das elektronische Gerät dann die in dem externen Speichergerät gespeicherten Fernseh- und/oder Tonrundfunkprogrammbeiträge nur abspielen kann, wenn die von der Steuereinheit des elektronischen Geräts generierte Kennung auf dem externen Speichergerät gespeichert ist. Die von der Steuereinheit generierte Kennung kann mit einer identischen, in einem Speicher des elektronischen Geräts gespeicherten Kennung verglichen werden. Auch kann die Steuereinheit dazu ausgebildet sein, eine in der Steuereinheit hinterlegte, bestimmte Kennung in einem externen Speichergerät zu speichern, wobei keine Übertragung einer auf einem anderen externen Speichergerät gespeicherten Aufzeichnungs- und/oder Wiedergabe-Software an den Speicher des elektronischen Geräts möglich ist, bis die auf dem einen externen Speichergerät gespeicherte Kennung nach erfolgter Wiedergabe des in diesem gespeicherten Fernseh- und/oder Tonrundfunkprogrammbeitrags durch die Steuereinheit gelöscht wird bzw. die Steuereinheit eine Löschung in dem externen Speichergerät ausgelöst hat.

In weiteren Ausführungen kann das externe Speichergerät ein USB-Stick sein und/oder das elektronische Gerät ein Gerät der Unterhaltungselektronik, insbesondere ein Fernsehgerät, eine Settop-Box, ein Videorecorder oder ein DVD/Blu-ray-Recorder oder -Abspielgerät, oder das externe Speichergerät kann mit mindestens einem elektronischen Gerät leitungslos oder über Leitungen leitungsgebunden verbunden sein, wobei die Verbindung des externen Speichergeräts und des mindestens einen elektronischen Geräts über eine Aktivierung des externen Speichergeräts durch die Steuereinheit erfolgt. Das externe Speichergerät kann dabei in einem Netzwerk mit einer Vielzahl von elektronischen Geräten aufgenommen sein, wobei eine Aufzeichnung bzw. Wiedergabe von Fernseh- und/oder Tonrundfunkprogrammbeiträgen nur über die auf dem elektronischen Gerät gespeicherte Aufzeichnungs- und/oder Wiedergabe-Software möglich ist. Die Aufzeichnungs- und/oder Wiedergabe-Software wird dabei in entsprechenden elektronischen Geräten nur für die Dauer einer Aufzeichnung von Fernseh- und/oder Tonrundfunkprogrammbeiträgen oder einer Wiedergabe von Fernseh- und/oder Tonrundfunkprogrammbeiträgen, die auf dem externen Speichergerät gespeichert sind, bereitgestellt. Daher weisen in diesem Netzwerk die elektronischen Geräte selbst keine Möglichkeit auf, empfangene Fernseh- und/oder Tonrundfunkprogrammbeiträge aufzuzeichnen oder wiederzugeben.

Die Erfindung wird weiter durch ein externes Speichergerät gelöst, welches über eine Schnittstelle mit einem elektronischen Gerät verbindbar ist, wobei in dem externen Speichergerät eine Aufzeichnungs- und/oder Wiedergabe-Software gespeichert ist, welche über die Schnittstelle an einen Speicher des elektronischen Geräts übertragbar ist, wobei die Aufzeichnungs- und/oder Wiedergabe-Software an den Speicher zum Aufzeichnen eines empfangenen Fernseh- und/oder Tonrundfunkprogrammbeitrags oder zum Wiedergeben eines in dem externen Speichergerät gespeicherten Fernseh- und/oder Tonrundfunkprogrammbeitrags durch Ansteuerung über eine Steuereinheit des elektronischen Geräts automatisch übertragen wird, wenn das externe Speichergerät mit dem elektronischen Gerät verbunden ist. Dabei wird die Aufzeichnungs- und/oder Wiedergabe-Software nur solange in dem Speicher des elektronischen Geräts gespeichert oder bleibt aktiv geschaltet, bis eine Aufzeichnung von empfangenen Fernseh- und/oder Tonrundfunkprogrammbeiträgen und/oder eine Wiedergabe eines in dem externen Speichergerät gespeicherten Fernseh- und/oder Tonrundfunkprogrammbeitrags abgeschlossen sind und das externe Speichergerät von dem elektronischen Gerät getrennt oder das elektronische Gerät ausgeschaltet wird bzw. ist, wobei die Aufzeichnungs- und/oder die Wiedergabe-Software in dem externen Speichergerät stets gespeichert bleibt.

Die Erfindung wird auch durch ein Aufzeichnungs- und/oder Wiedergabesystem, welches ein elektronisches Gerät und ein externes Speichergerät umfasst, gelöst, wobei das externe Speichergerät über eine Lan- oder WLan-Schnittstelle mit dem elektronischen Gerät verbindbar ist und wobei das elektronische Gerät einen Empfänger zum Empfangen von Fernseh- und/oder Tonrundfunkprogrammen, eine Bedien-Speichereinheit, eine Darstellungseinheit zum Darstellen von Fernseh- und/oder Tonrundfunkprogrammen und eine Speichereinheit aufweist und das externe Speichergerät einen Speicher für die Aufzeichnung und/oder Wiedergabe von Fernseh- und/oder Tonrundfunkprogrammbeiträgen aufweist. Dabei ist in dem externen Speichergerät eine Aufzeichnungs- und/oder Wiedergabe-Software gespeichert, welche über die Schnittstelle an einen Speicher des elektronischen Geräts übertragbar ist, wobei die Aufzeichnungs- und/oder die Wiedergabe-Software an den Speicher des elektronischen Geräts zum Aufzeichnen eines empfangenen Fernseh- und/oder Tonrundfunkprogrammbeitrags oder zum Wiedergeben eines in dem externen Speichergeräts gespeicherten Fernseh- und/oder Tonrundfunkprogrammbeitrags mittels der Steuereinheit automatisch übertragen wird, wenn das externe Speichergerät mit dem elektronischen Gerät verbunden ist, wobei die Aufzeichnungs- und/oder die Wiedergabe-Software nur solange in dem Speicher des elektronischen Geräts gespeichert oder aktiv geschaltet bleibt, bis eine Aufzeichnung von empfangenen Fernseh- und/oder Tonrundfunkprogrammbeiträgen und/oder eine Wiedergabe beendet sind. Darüber hinaus wird nach der Aufzeichnung eines empfangenen Fernseh- und/oder Tonrundfunkprogrammbeitrags oder nach der Wiedergabe eines in dem externen Speichergerät gespeicherten Fernseh- und/oder Tonrundfunkprogrammbeitrags oder nach dem Trennen der Verbindung des externen Speichergeräts von dem elektronischen Gerät oder nach dem Ausschalten des elektronischen Geräts die Aufzeichnungs- und/oder die Wiedergabe-Software im Speicher des elektronischen Geräts gelöscht.

Die vorstehend beschriebenen Vorteile für das elektronische Gerät gelten dabei in gleicher Weise für das externe Speichergerät und das Aufzeichnungs- und/oder Wiedergabesystem.

Die Erfindung kann ebenso bei PCs, Laptops, Mobil-Telefonen und anderen elektronischen Geräten Verwendung finden, welche dazu ausgebildet sind, Fernseh- und/oder Tonrundfunkprogramme im Sinne der Erfindung aufzuzeichnen bzw. wiederzugeben. Dabei ist die dauerhafte Speicherung einer Aufzeichnungs- und/oder Wiedergabe-Software auch auf einer Speicherkarte möglich, wobei die Steuereinheit des elektronischen Gerätes eine Übertragung der Aufzeichnungs- und/oder Wiedergabe-Software auf einen Speicher des elektronischen Geräts und ggf. eine Installation der Software ausführen bzw. veranlassen kann und nach einer Aufzeichnung und/oder Wiedergabe die Software wieder löscht.

Weitere Vorteile und Merkmale der Erfindung gehen aus der nachfolgenden Figurenbeschreibung und der Figur hervor, welche beispielhaft die Erfindung zeigt. Die in der Figur dargestellte Ausführungsform hat dabei nur beispielhaften Charakter.

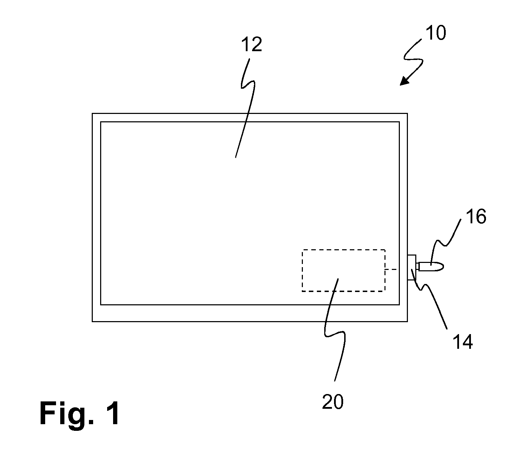

Figur 1 zeigt dabei eine beispielhafte Ausführungsform mit einem elektronischen Gerät 10 der Unterhaltungselektronik und einem externen Speichergerät 16.

Das in Figur 1 dargestellte elektronische Gerät 10 weist eine Darstellungseinheit 12 auf, wie beispielsweise einen Bildschirm eines Fernsehers. Das elektronische Gerät 10 ist in diesem Ausführungsbeispiel ein Fernsehgerät. Das elektronische Gerät 10 weist eine Schnittstelle 14 auf, über welche ein externes Speichergerät 16 angeschlossen werden kann. Die Schnittstelle 14 weist dazu einen USB-Anschluss und das externe Speichergerät 16 einen entsprechenden, mit dem USB-Anschluss der Schnittstelle 14 korrespondierenden USB-Anschluss auf. Die Schnittstelle 14 ist mit weiteren Komponenten 20 des elektronischen Geräts 10 verbunden.

Die weiteren Komponenten 20 umfassen einen Empfänger zum Empfangen von Fernseh- und/oder Tonrundfunkprogrammen, einen Speicher zum Speichern von Bedien-Software mindestens für die Steuerung des elektronischen Geräts 10 und eine Steuereinheit. Darüber hinaus können die weiteren Komponenten 20 weitere Einheiten und Anschlüsse umfassen. Beispielsweise sind diese weiteren Einheiten und Anschlüsse weitere USB-Schnittstellen, Scart-Anschlüsse, Antennenanschlüsse, eine Abstimmeinheit zur Abstimmung des Empfängers auf eines der Fernseh- und/oder Tonrundfunkprogramme von verschiedenen Sendeanstalten, eine Zeitgebereinheit und ein Infrarotempfänger für beispielsweise eine Auswahleinheit, wie eine Fernbedienung. So ist es auch möglich, unter Zuhilfenahme der Zeitgebereinheit eine Wiedergabe von in dem externen Speichergerät 16 gespeicherten Fernseh- und/oder Tonrundfunkprogrammbeiträgen nur dann mittels des elektronischen Geräts 10 wiederzugeben, wenn die Aufzeichnung innerhalb eines bestimmten vorangegangenen Zeitraums liegt. Die Zeitgebereinheit kann dabei dazu dienen, aufgezeichnete und in dem externen Speichergerät 16 gespeicherte Fernseh- und/oder Tonrundfunkprogrammbeiträge mit einem (Aufzeichnungs-)Datum zu versehen. Das (Aufzeichnungs-)Datum kann bei der Generierung von Kennungen für das elektronische Gerät 10 und/oder für das externe Speichergerät 16 verwendet werden.

Jedoch können die weiteren Komponenten 20 auch andere Komponenten bzw. Einheiten und Anschlüsse umfassen und müssen notwendigerweise nicht die vorher genannten Einheiten aufweisen, wenn es sich bei dem elektronischen Gerät 10 beispielsweise um einen DVD-Player oder einen Blu-ray-Player, einen Videorecorder, einen SAT-Receiver oder andere Einrichtungen, wie sie zum Beispiel auch unter dem Oberbegriff von Settop-Boxen bekannt sind, handelt. Auch können elektronische Geräte 10 Konsolen für Videospiele sein, über welche beispielsweise auf das Internet zugegriffen werden kann und die Anschlüsse für Speichermedien, wie beispielsweise USB-Sticks aufweisen, wobei mittels dieser Konsolen ebenfalls bei dem Anschluss eines erfindungsgemäßen externen Speichergeräts 16 empfangbare Fernseh- und/oder Tonrundfunkprogrammbeiträge aufgezeichnet und wiedergegeben werden können. Die Übertragung erfolgt dabei ebenso wie für die anderen elektronischen Geräte 10 beschrieben.

Das elektronische Gerät 10 kann von einem Empfänger empfangene Fernseh- und/oder Tonrundfunkprogrammbeiträge und auf der Darstellungseinheit 12 dargestellte Fernseh- und/oder Tonrundfunkprogrammbeiträge nur aufzeichnen, wenn das externe Speichergerät 16 über die Schnittstelle 14 angeschlossen ist. Wird über eine nicht dargestellte Fernbedienung ein Befehl zum Aufzeichnen eines Fernsehprogrammbeitrags eingegeben, so wird nach Maßgabe einer Steuereinheit eine in dem externen Speichergerät 16 gespeicherte Aufzeichnungs-Software in einen Speicher des elektronischen Geräts 10 geladen und dort gespeichert. Über die Aufzeichnungs-Software kann sodann das elektronische Gerät 10 den dargestellten Fernsehprogrammbeitrag aufnehmen, wobei nach Beendigung der Aufzeichnung des Fernsehprogrammbeitrags mittels der Steuereinheit die in dem Speicher des elektronischen Geräts 10 gespeicherte Aufzeichnungssoftware wieder gelöscht wird. Der aufgezeichnete Fernsehprogrammbeitrag wird in dem externen Speichergerät 16 gespeichert.

Die Wiedergabe des auf dem externen Speichergerät 16 gespeicherten Fernsehprogrammbeitrags durch das elektronische Gerät 10 kann nur dann erfolgen, wenn das externe Speichergerät 16 über die Schnittstelle 14 mit dem elektronischen Gerät 10 verbunden ist und wenn eine auf dem externen Speichergerät 16 gespeicherte Wiedergabe-Software in den Speicher des elektronischen Geräts 10 geladen und dort gespeichert wird. Das Übertragen der Aufzeichnungs- und/oder Wiedergabe-Software kann jedes Mal dann erfolgen, wenn das externe Speichergerät 16 über die Schnittstelle 14 mit dem elektronischen Gerät 10 verbunden wird. Jedoch ist es auch möglich, dass zusätzlich zu dem Anschließen des externen Speichergeräts 16 eine Eingabe durch einen Benutzer erforderlich ist. Dazu kann auf der Darstellungseinheit 12 ein Menü-Fenster geöffnet werden, welches eine Aufforderung zur Eingabe eines Befehls bezüglich einer Aufzeichnung und/oder Wiedergabe bereitstellt. Wird von einem Benutzer eine Aufzeichnung bzw. Wiedergabe gewünscht, so kann er dies beispielsweise über eine Fernbedienung eingeben.

Nachdem die Wiedergabe eines auf dem externen Speichergerät 16 gespeicherten Fernsehprogrammbeitrags für das elektronische Gerät 10 erfolgt ist, wird mittels der Steuereinheit des elektronischen Geräts 10 die Wiedergabe-Software gelöscht. Darüber hinaus ist es auch möglich, dass nach einer einmaligen Wiedergabe des in dem externen Speichergerät 16 gespeicherten Fernseh- und/oder Tonrundfunkprogrammbeitrags dieser gelöscht wird.

Eine Aufzeichnung von Fernseh- und/oder Tonrundfunkprogrammbeiträgen, die erst zu einem späteren Zeitpunkt gezeigt /ausgestrahlt werden, kann auch nur dann erfolgen, wenn das externe Speichergerät 16 zu dem Zeitpunkt der Austrahlung/ Sendung des entsprechenden Fernseh- und/oder Tonrundfunkprogrammbeitrags an das elektronische Gerät 10 angeschlossen ist. Die Steuereinheit des elektronischen Geräts 10 lädt dann die Aufzeichnungs-Software kurz vor Beginn des aufzuzeichnenden Fernseh- und/oder Tonrundfunkprogrammbeitrags und löscht die Aufzeichnungs-Software sofort nach der Aufzeichnung. Dabei muss das externe Speichergerät 16 vom Zeitpunkt der Programmierung bis zum Zeitpunkt der Aufzeichnung nicht an dem elektronischen Gerät 10 angeschlossen bleiben, wenn zum Beispiel bei der Programmierung eine Kennung des externen Speichergeräts 16 in einem Speicher des elektronischen Geräts 10 gespeichert wird und dann die Aufzeichnung nur dann beginnt, wenn die zum Zeitpunkt der Programmierung gespeicherte Kennung in dem elektronischen Gerät 10 mit der Kennung des zur Aufzeichnung angeschlossenen externen Speichergeräts 16 übereinstimmt.

Beim erfindungsgemäßen Aufzeichnungs- und/oder Wiedergabesystem können mehrere elektronische Geräte 10 auch miteinander verbunden sein, beispielsweise über ein LAN- oder WLAN-Netzwerk, wobei die Aufzeichnungs- und/oder Wiedergabe-Software in dem externen Speichergerät 16 gespeichert ist und bei Bedarf an die jeweiligen elektronischen Geräte 10 und nur für die Dauer der Verwendung (Aufzeichnen/Wiedergabe) übertragen wird. Dadurch entfallen für die elektronischen Geräte 10 die eingangs genannten Urheberrechts-Abgaben, welche lediglich für das externe Speichergerät 16 zu zahlen sind.

Jedoch ergibt sich durch das Bereitstellen der Aufzeichnung und/oder Wiedergabe mittels des externen Speichergeräts 16 keine Einschränkung in den Funktionen der elektrischen Geräte 10, da weiterhin Fernseh- und/oder Tonrundfunkprogramme aufgenommen werden können und diese auch über beliebige elektronische Geräte 10 dargestellt werden können.

In weiteren Ausführungen kann eine Aufzeichnungs- und/oder Wiedergabe-Software in dem externen Speichergerät 16 gespeichert sein, die einen Zugriff des externen Speichergeräts 16 zum Aufzeichnen bzw. Kopieren von auf beispielsweise einer Festplatte des elektronischen Geräts 10 gespeicherten Fernseh- und/oder Tonrundfunkprogrammbeiträgen verhindert. Weiter kann dabei über die Steuereinheit des elektronischen Geräts 10 eine Aufzeichnungs- und/oder Wiedergabe-Software in einen Speicher des elektronischen Geräts 10 übertragbar sein, um Fernseh- und/oder Tonrundfunkprogrammbeiträge aufzuzeichnen oder wiederzugeben, wobei die Fernseh- und/oder Tonrundfunkprogrammbeiträge auf der Festplatte des elektronischen Geräts 10 gespeichert werden. Jedoch sind das elektronische Gerät 10 und das externe Speichergerät 16 technisch bzw. softwarebedingt so ausgebildet, dass die in dem Speicher des elektronischen Geräts 10 gespeicherten Fernseh- und/oder Tonrundfunkprogrammbeiträge nicht von dem externen Speichergerät 16 aufgezeichnet werden können. Da das elektronische Gerät 10 keine Software zum Aufzeichnen und Wiedergeben der Fernseh- und/oder Tonrundfunkprogrammbeiträge aufweist, kann auch mittels des elektronischen Geräts 10 keine Vervielfältigung von urheberrechtlich geschützten Programmbeiträgen vorgenommen werden.

Das externe Speichergerät 16 muss auch nicht zwingend eine physische Verbindung zu dem elektronischen Gerät 10 aufweisen, um eine Aufzeichnungs- und/oder Wiedergabe-Software zu übertragen. So können das elektronische Gerät 10 und das externe Speichergerät 16 dazu ausgebildet sein, ohne eine physische Verbindung (z.B. via Bluetooth) miteinander zu kommunizieren und Daten zu übertragen. Befindet sich das externe Speichergerät 16 beispielsweise in unmittelbarer Nähe des elektronischen Geräts 10 (z.B. in einem Bereich von wenigen Zentimetern bis wenige Meter von dem elektronischen Gerät 10 entfernt; beispielsweise 1 - 2 cm bis 15 m), so erkennt die Steuereinheit des elektronischen Geräts 10 die Anwesenheit des externen Speichergeräts 16.

Dabei kann über ein sich öffnendes Menü-Fenster ein Benutzer aufgefordert werden einzugeben, ob er eine Aufzeichnung bzw. eine Wiedergabe eines auf dem externen Speichergerät 16 gespeicherten Fernseh- und/oder Tonrundfunkprogrammbeitrags wünscht. Wird dies durch den Benutzer bestätigt, beginnt erst dann die Steuereinheit des elektronischen Geräts 10 die Übertragung der Aufzeichnungs- und/oder Wiedergabe-Software in einen Speicher des elektronischen Geräts 10, wobei diese nach einer Aufzeichnung bzw. Wiedergabe mittels der Steuereinheit gelöscht wird. Zudem kann die Aufzeichnungs- und/oder Wiedergabe-Software gelöscht werden, wenn das externe Speichergerät 16 sich aus einem Übertragungsbereich der (Funk-) Verbindung entfernt bzw. sobald eine Verbindung zu dem elektronischen Gerät 10 getrennt ist.

Die Steuereinheit kann weiter mittels einer Eingabe (beispielsweise über eine Fernbedienung) alle aktuell verfügbaren externen Speichergeräte 16 anzeigen. Auch können dabei weitere Informationen bezüglich der auf den externen Speichergeräten 16 gespeicherten Fernseh- und/oder Tonrundfunkprogrammbeiträge dargestellt werden. Außerdem kann bei einer drahtlosen Übertragung einer Aufzeichnungs- und/oder Wiedergabe-Software eine bestimmte Kennung für das externe Speichergerät 16 bzw. das elektronische Gerät 10 erforderlich sein. Dabei muss in einer Ausführung der Erfindung zuerst eine Synchronisation zwischen dem elektronischen Gerät 10 und dem externen Speichergerät 16 durchgeführt werden (z.B. müssen beide Gerät miteinander verbunden werden oder es müssen entsprechende Codes eingegeben werden).

### Bezugszeichenliste

- 10: elektronisches Gerät
- 12: Darstellungseinheit
- 14: Schnittstelle
- 16: externes Speichergerät
- 20: weitere Komponenten

## Patentansprüche

1. Elektronisches Gerät (10), mindestens aufweisend einen Empfänger zum Empfangen von Fernseh- und/oder Tonrundfunkprogrammen, einen Speicher zum Speichern von Bedien-Software mindestens für die Steuerung des elektronischen Geräts (10), eine Darstellungseinheit (12) zum Darstellen von Fernseh- und/oder Tonrundfunkprogrammen, eine Steuereinheit und eine Schnittstelle (14) für den Anschluss eines externen Speichergeräts (16) zum Speichern von Fernseh- und/oder Tonrundfunkprogrammbeiträgen, **dadurch gekennzeichnet,**
**dass** in dem externen Speichergerät (16) eine Aufzeichnungs- und/oder Wiedergabe-Software gespeichert ist, die über die Schnittstelle (14) in einen Speicher des elektronischen Geräts (10) übertragen wird und das elektronische Gerät (10) zum Speichern eines empfangenen Programmbeitrags und/oder zum Speichern eines in einem Speicher des elektronischen Gerätes (10) gespeicherten Programmbeitrags im externen Speichergerät (16) und/oder zur Wiedergabe eines im externen Speichergerät (16) gespeicherten Programmbeitrags nur so lange aktiviert, wie das externe Speichergerät (16) elektrisch angeschlossen ist, wobei mittels der Steuereinheit die Aufzeichnungs- und/oder die Wiedergabe-Software an den Speicher zum Aufzeichnen eines empfangenen Fernseh- und/oder Tonrundfunkprogrammbeitrags oder zum Wiedergeben eines in einem internen Programmbeitragsspeicher des externen Speichergeräts (16) gespeicherten Fernseh- und/oder Tonrundfunkprogrammbeitrags automatisch übertragen wird, wenn das externe Speichergerät (16) mit dem elektronischen Gerät (10) verbunden ist und/oder durch eine Eingabe eines Übertragungsbefehls über die Steuereinheit die Aufzeichnungs- und/oder Wiedergabe-Software übertragen wird, und wobei die Aufzeichnungs- und/oder die Wiedergabe-Software nur solange in dem Speicher des elektronisches Geräts (10) gespeichert wird, wie eine Datenspeicherung einer Aufzeichnung von empfangenen Fernseh- und/oder Tonrundfunkprogrammbeiträgen und/oder eine Wiedergabe eines in dem externen Speichergerät (16) gespeicherten Fernseh- und/oder Tonrundfunkprogrammbeitrags erfolgen oder bis das externe Speichergerät (16) abgezogen wird.

2. Elektronisches Gerät (10) nach Anspruch 1, **dadurch gekennzeichnet,**
**dass** nach der Aufzeichnung eines empfangenen Fernseh- und/oder Tonrundfunkprogrammbeitrags oder nach der Wiedergabe eines in dem externen Speichergerät (16) gespeicherten Fernseh- und/oder Tonrundfunkprogrammbeitrags oder nach dem Trennen der Verbindung des externen Speichergeräts (16) von der Schnittstelle (14) des elektronischen Geräts (10) oder nach dem Ausschalten des elektronischen Geräts (10) die Steuereinheit automatisch die Aufzeichnungs- und/oder die Wiedergabe-Software in dem Speicher des elektronischen Geräts (10) löscht.

3. Elektronisches Gerät (10) nach Anspruch 1 oder 2, **dadurch gekennzeichnet,**
**dass** die Aufzeichnungs- und/oder die Wiedergabe-Software teilweise in dem Speicher des elektronischen Geräts (10) und dem externen Speichergerät (16) gespeichert ist.

4. Elektronisches Gerät (10) nach einem der vorhergehenden Ansprüche, **dadurch gekennzeichnet,**
**dass** die Aufzeichnungs- und/oder die Wiedergabe-Software in dem Speicher des elektronischen Geräts (10) gespeichert ist und in dem externen Speichergerät (16) eine dazugehörige Kennung gespeichert ist, wodurch eine Aktivierung der Aufzeichnungs- und/oder der Wiedergabe-Software mittels der Steuereinheit erfolgt.

5. Elektronisches Gerät (10) nach Anspruch 1 oder 2, **dadurch gekennzeichnet,**
**dass** die Aufzeichnungs- und/oder die Wiedergabe-Software in dem externen Speichergerät (16) an den Speicher des elektronischen Geräts (10) nur übertragbar ist, wenn eine Kennung des elektronischen Geräts (10) mit einer in dem externen Speichergerät (16) abgespeicherten Kennung übereinstimmt.

6. Elektronisches Gerät (10) nach Anspruch 4 oder 5, **dadurch gekennzeichnet,**
**dass** die Kennung eine MAC-Adresse oder eine Seriennummer ist.

7. Elektronisches Gerät (10) nach einem der vorhergehenden Ansprüche, **dadurch gekennzeichnet,**
**dass** die in dem externen Speichergerät (16) gespeicherten Fernseh- und/oder Tonrundfunkprogrammbeiträge nur auf dem elektronischen Gerät (10) wiedergebar sind, mit welchem die Fernseh- und/oder Tonrundfunkprogrammbeiträge auf dem angeschlossenen externen Speichergerät (16) aufgezeichnet worden sind.

8. Elektronisches Gerät (10) nach einem der vorhergehenden Ansprüche, **dadurch gekennzeichnet,**
**dass** das externe Speichergerät (16) ein USB-Stick ist und/oder dass das elektronische Gerät (10) ein Gerät der Unterhaltungselektronik ist.

9. Elektronisches Gerät nach Anspruch 8, **dadurch gekennzeichnet,**
**dass** das elektronische Gerät (10) ein Fernsehgerät, eine Set-Top-Box, ein Videorecorder oder ein DVD/Blu-ray-Recorder oder -Abspielgerät ist.

10. Elektronisches Gerät nach einem der Ansprüche 1 bis 7, **dadurch gekennzeichnet,**
**dass** das externe Speichergerät (16) mit mindestens einem elektronischen Gerät leitungslos oder über Leitungen leitungsgebunden verbunden ist, wobei die Verbindung des externen Speichergeräts (16) an das mindestens eine elektronische Gerät (10) über eine Aktivierung des externen Speichergeräts (16) durch die Steuereinheit erfolgt.

11. Externes Speichergerät (16), wobei das externe Speichergerät (16) über eine Schnittstelle (14) mit einem elektronischen Gerät (10) verbindbar ist, **dadurch gekennzeichnet,**
**dass** in dem externen Speichergerät (16) eine Aufzeichnungs- und/oder Wiedergabe-Software gespeichert ist, welche über die Schnittstelle (14) an einen Speicher des elektronischen Geräts (10) übertragbar ist, wobei die Aufzeichnungs- und/oder die Wiedergabe-Software an den Speicher zum Aufzeichnen eines empfangenen Fernseh- und/oder Tonrundfunkprogrammbeitrags oder zum Wiedergeben eines in dem externen Speichergerät (16) gespeicherten Fernseh- und/oder Tonrundfunkprogrammbeitrags durch Ansteuerung über eine Steuereinheit des elektronischen Geräts (10) automatisch übertragen wird, wenn das externe Speichergerät (16) mit dem elektronischen Gerät (10) verbunden ist, wobei die Aufzeichnungs- und/oder die Wiedergabe-Software nur solange in dem Speicher des elektronisches Geräts (10) gespeichert wird oder aktiv geschaltet bleibt, bis eine Aufzeichnung von empfangenen Fernseh- und/oder Tonrundfunkprogrammbeiträgen und/oder eine Wiedergabe eines in dem externen Speichergerät (16) gespeicherten Fernseh- und/oder Tonrundfunkprogrammbeitrags abgeschlossen ist, das externe Speichergerät (16) von dem elektronischen Gerät (10) getrennt oder das elektronische Gerät (10) ausgeschaltet wird, wobei die Aufzeichnungs- und/oder die Wiedergabe-Software in dem externen Speichergerät (16) stets gespeichert bleibt.

12. Aufzeichnungs- und/oder Wiedergabesystem, umfassend ein elektronisches Gerät (10) und ein externes Speichergerät (16), wobei das externe Speichergerät (16) über eine LAN- oder WLAN-Schnittstelle (14) mit dem elektronischen Gerät (10) verbindbar ist und wobei das elektronische Gerät (10) einen Empfänger zum Empfangen von Fernseh- und/oder Tonrundfunkprogrammen, eine Bedien-Speichereinheit, eine Darstellungseinheit (12) zum Darstellen von Fernseh- und Tonrundfunkprogrammen und eine Steuereinheit aufweist und das externe Speichergerät (16) einen Speicher für die Aufzeichnung und Wiedergabe der Fernseh- und/oder Tonrundfunkbeiträge aufweist, **dadurch gekennzeichnet,**
**dass** in dem externen Speichergerät (16) eine Aufzeichnungs- und/oder Wiedergabe-Software gespeichert ist, welche über die Schnittstelle (14) an einen Speicher des elektronischen Geräts (10) übertragbar ist, wobei die Aufzeichnungs- und/oder die Wiedergabe-Software an den Speicher des elektronischen Geräts (10) zum Aufzeichnen eines empfangenen Fernseh- und/oder Tonrundfunkprogrammbeitrags oder zum Wiedergeben eines in dem externen Speichergeräts (16) gespeicherten Fernseh- und/oder Tonrundfunkprogrammbeitrags mittels der Steuereinheit automatisch übertragen wird, wenn das externe Speichergerät (16) mit dem elektronischen Gerät (10) verbunden ist, wobei die Aufzeichnungs- und/oder die Wiedergabe-Software nur solange in dem Speicher des elektronisches Geräts (10) gespeichert oder aktiv geschaltet bleibt, bis eine Aufzeichnung von empfangenen Fernseh- und/oder Tonrundfunkprogrammbeiträgen und/oder eine Wiedergabe beendet ist, und wobei nach der Aufzeichnung eines empfangenen Fernseh- und/oder Tonrundfunkprogrammbeitrags oder nach der Wiedergabe eines in dem externen Speichergerät (16) gespeicherten Fernseh- und/oder Tonrundfunkprogrammbeitrags oder nach dem Trennen der Verbindung des externen Speichergeräts (16) von dem elektronischen Gerät (10) oder nach dem Ausschalten des elektronischen Geräts (10) die Aufzeichnungs- und/oder die Wiedergabe-Software in dem Speicher des elektronischen Geräts (10) gelöscht wird.
